(19) **Europäisches Patentamt**
**European Patent Office**
**Office européen des brevets**

(11) **EP 3 655 722 B1**

(12) **EUROPEAN PATENT SPECIFICATION**

(45) Date of publication and mention
of the grant of the patent:
**12.07.2023 Bulletin 2023/28**

(21) Application number: **18835041.7**

(22) Date of filing: **18.07.2018**

(51) International Patent Classification (IPC):
**G01B 17/00** (2006.01)   **G21C 17/017** (2006.01)
**G01P 13/04** (2006.01)

(52) Cooperative Patent Classification (CPC):
**G01B 17/00; G21C 17/017;** G01P 13/04

(86) International application number:
**PCT/CA2018/050873**

(87) International publication number:
**WO 2019/014766 (24.01.2019 Gazette 2019/04)**

(54) **METHODS AND APPARATUS FOR DETECTION AND POSITIONING OF OBJECTS BY VIBRATION**

VERFAHREN UND VORRICHTUNG ZUR DETEKTION UND POSITIONIERUNG VON
GEGENSTÄNDEN DURCH VIBRATION

PROCÉDÉS ET APPAREIL DE DÉTECTION ET DE POSITIONNEMENT D'OBJETS PAR
VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2017 US 201762534184 P**

(43) Date of publication of application:
**27.05.2020 Bulletin 2020/22**

(73) Proprietor: **Candu Energy Inc.
Mississauga, Ontario L5K 1B2 (CA)**

(72) Inventors:
• **VIDICAN, Razvan
Oakville, Ontario L6M 4S8 (CA)**
• **SZCZEPAN, Andrew
Mississauga, Ontario L4W 3A2 (CA)**

(74) Representative: **J A Kemp LLP
80 Turnmill Street
London EC1M 5QU (GB)**

(56) References cited:
**US-A- 5 922 964      US-A1- 2010 284 505
US-A1- 2013 114 777   US-A1- 2016 041 127**

## Description

## FIELD

This relates generally to detection and positioning of objects, and in particular, to detection and repositioning of objects by controlled vibration.

## BACKGROUND

In a CANDU® nuclear reactor, the pressure tubes which contain the fuel bundles are each positioned within a calandria tube. It is necessary to have an annular space maintained between the pressure tube and the calandria tube to allow for the circulation of gases which thermally insulate the hot pressure tube from the relatively colder calandria tube and the heavy water moderator which flows in the space outside the calandria tube.

The annular space is maintained by annulus spacers, which are one component that make up a CANDU® reactor fuel channel. These spacers maintain a radial spacing between two coaxial tubes, an inner pressure tube and an outer calandria tube, and help the calandria tubes support the inner pressure tubes. They also allow for differential axial expansion and creep over life between the tubes inside and outside them. Due to a design asymmetry in the spacer they have a requirement for radial as well as axial position control. There are both loose-fitting and snug-fitting annulus spacers, which differ in design.

A loose-fitting annulus spacer comprises a closely coiled spring made from a square cross section wire, assembled on a circular girdle wire to form a torus. The girdle wire of the loose-fitting spacer is welded to form a continuous loop of fixed size. The minor diameter of the loose-fitting spacer is such that it is slightly larger than that of the outside diameter of a pressure tube. As such, the spacer fits loosely around the pressure tube. The spacer stays in its installed position by friction alone and not by spring tension. Loose-fitting spacers were used in earlier CANDU® reactors.

A snug-fitting, or tight-fitting, annulus spacer comprises a closely coiled spring made from a square cross section wire, assembled on a circular girdle wire to form a torus. The girdle wire is not welded, therefore the effective minor diameter of the spacer can be increased by applying tension to extend the coiled spring. The design of the snug-fitting spacer is such that the coil spring is under some tension when installed on a pressure tube, resulting in a snug fit. The design of the snug-fitting spacer is such that they are not fixed rigidly in position. The spacer is held in position by spring tension and friction. Snug-fitting spacers typically maintain their initial desired position, however, it may be possible that a spacer may move from its desired position, or, during the course of operation of a reactor, it may be desirable to move the position of a spacer. Pressure tubes on which spacers are mounted may experience creep over time and develop increased slope and changes in cross section such that spacers are subject to varying friction and reaction loads, and in some instances a tendency to naturally rotate and/or slide in a certain direction.

To provide support, the annulus spacers must be located at the proper position; if a spacer is out of position, the hot pressure tube may come into contact with the cooler calandria tube.

During installation of spacers in a reactor, or, as suggested above, during its operation, spacers may be displaced from their required positions with the result that the pressure tubes will lack the necessary configuration of supports to carry the distributed load in operation of the reactor, and serious problems may arise from sagging of these tubes. It is therefore desirable to have some way of detecting and repositioning (if necessary) the spacers after installation or even after the reactor has been operating for some time. The optimal position of a spacer may change slightly during the operating life of a reactor. The original installed spacer position is based on the support conditions throughout the reactor life. However, it may be desirable to reposition the spacers late in the reactor life to better suit the end of life conditions. Repositioning spacers late in life may extend the operating life of a reactor by some years, and may result in a significant economic benefit.

Annulus spacers are located between the pressure tubes and the calandria tubes and may not be directly accessible by mechanical means. Since the spacer position is not fixed mechanically, it is desirable to have a means to detect their position.

U.S. Patent No. 4,613,477 ("U.S. '477") discloses a method for repositioning garter springs, used as annulus spacers between the coolant tubes and calandria tubes of fluid cooled nuclear reactors. Such garter springs are not directly accessible by mechanical means. In the method of U.S. '477, an electromagnetic coil is advanced along the selected fuel channel to a position adjacent the garter spring, and a current pulse is passed through the coil thereby to exert an electromagnetic repulsive force on the garter spring having a component in the direction of the required displacement. This technique is applicable to the loose-fitting spacers which have the welded girdle wire. The welded girdle wire of the loose-fitting spacer forms a continuous electrical circuit that is necessary for the electromagnetic-based technique. The electromagnetic technique does not work on the snug-fitting spacer, because the non-welded girdle wire does not provide a continuous electrical path within the spacer. US 2010/284505 A1 discloses a method of positioning an annulus spacer circumscribing a tube comprising the steps of vibrating the tube to induce motion of the annulus spacer, measuring the induced tube vibration at several locations along the tube and determining a new position of the annulus spacer based on the comparison of the time signals representative of the impacts between the annulus spacer and the tube during motion of said spacer.

A need remains for an apparatus and method for detecting and repositioning snug-fitting annulus spacers.

This background information is provided for the purpose of making known information believed by the applicant to be of possible relevance to the present disclosure. No admission is necessarily intended, nor should be construed, that any of the preceding information constitutes prior art.

## SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. In accordance with one aspect, there is provided a method of detecting and imparting motion to an object by applying vibration, potentially indirectly through a contact surface, and through measurement of the changing vibration by position and time, locate an object and cause motion in an intended manner. It also allows for the adapting of inputs to correct for a variety of different boundary conditions including during the motion. As part of this, vibration isolation may be applied to help isolate and only cause motion to an intended target object, or limit its motion range or amplitude. The isolation points also provides for an ability to jack the structure between these points to change clearances and loads to improve the ability to get motion on the target object, and the structure of these devices allows tailoring of the absorption and/or reflection of the imparted vibration.

In accordance with one aspect, there is provided a method of detecting an annulus spacer having an inner cylindrical surface in contact with an inner tube and an outer cylindrical surface in contact with a generally coaxial outer tube, which method comprises the steps of: vibrating the wall of said inner tube within said isolated section; measuring vibration in the wall at a minimum of two axial positions within said isolated section, and detecting a change in the vibration level of the wall at one or more of said axial positions in comparison to the remaining axial position(s), wherein the change in vibration is indicative of the presence of the annulus spacer at or near the axial position at which said change in vibration was detected.

In accordance with another aspect, there is provided a method of axially repositioning an annulus spacer having an inner cylindrical surface in contact with an inner tube and an outer cylindrical surface in contact with a generally coaxial outer tube, which method comprises the steps of: vibrationally isolating a section of the wall of the inner tube adjacent to the annulus spacer; causing said annulus spacer to go from a loaded condition to an unloaded condition; vibrating the annulus spacer by vibrating the isolated section of the wall at a desired frequency such that the annulus spacer is displaced longitudinally.

In accordance with another aspect, there is provided an apparatus for detecting and/or repositioning an annulus spacer having an inner cylindrical surface in contact with an inner tube and an outer cylindrical surface in contact with a generally coaxial outer tube, comprising: a tool head having a first end and a second end; a first and a second clamping block assembly at said first and second ends, respectively, of said tool head; one or more piezo-actuators associated with said tool head and operable to vibrate said inner tube; and accelerometers associated with said tool head for measuring vibration of said inner tube.

Other features will become apparent from the drawings in conjunction with the following description.

## BRIEF DESCRIPTION OF DRAWINGS

In the figures which illustrate example embodiments:

Figure 1 depicts an arrangement of an inner pressure tube, an outer calandria tube and an annulus spacer.

Figure 2 is a schematic of a reactor showing key components, including fuel channel annulus spacers, inner pressure tubes and outer calandria tubes.

Figure 3 depicts a tool head according to an embodiment, positioned within an inner pressure tube.

Figure 4 is a flow chart depicting a method of detecting an object, according to an embodiment.

Figures 5A and 5B are simplified views showing the difference in mode shapes for a pressure tube, with and without the presence of a loaded annulus spacer, according to an embodiment.

Figure 6 depicts axial variation of modes for a clamped-clamped beam, according to an embodiment.

Figures 7A-7B are example frequency-domain plots of transfer functions relating multiple measurements of a pressure tube's response to vibration, according to an embodiment.

Figure 8 is a flow chart depicting a method of positioning an object, according to an embodiment.

Figures 9A-9B are example frequency-domain plots of response functions with a spacer pinched between a pressure tube and calandria tube and with the spacer unloaded, respectively, according to an embodiment.

Figures 10A-10F are plots depicting modes of resonant vibration of a clamped-clamped tube, according to embodiments.

Figures 11A-11E are plots depicting modes of circumferential resonant vibration of a clamped-clamped tube, according to embodiments.

Figure 12 is a flow chart depicting a method of detecting a direction of motion of an object, according to an embodiment.

Figure 13 is a flow chart depicting a method of detecting a direction of motion of an object, according to an embodiment.

## DETAILED DESCRIPTION

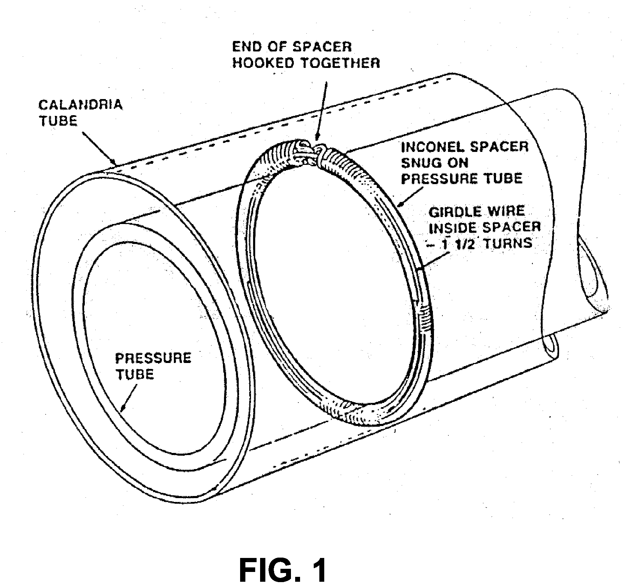

Disclosed herein are apparatus and methods for detection and/or repositioning of one or more annulus spacers surrounding a first tube that is positioned within, and generally coaxial with, a second tube (e.g., see Figure 1). In the example depicted in Figure 1, the annulus spacer maintains the radial spacing between the first tube (e.g., an inner tube such as a pressure tube) and the second tube (e.g., an outer tube such as a calandria tube). Typically more than one annulus spacer work together to maintain the radial spacing between the first tube and the second tube.

In a specific example of the present invention, the inner tube is a pressure tube, the outer tube is a calandria tube and the spacer is a snug-fitting annulus spacer, as would be found in a CANDU® nuclear reactor. In another specific example, the spacer is a loose-fitting annulus spacer. As will be readily appreciated by the skilled worker, the apparatus and methods of the present application can be used in other applications in which an inner tube is positioned within and coaxial with an outer tube and the tubes maintained in spaced relation by one or more annulus spacers.

As will be described in more detail below, there is provided an apparatus and method for detecting an annulus spacer, repositioning an annulus spacer or detecting and repositioning an annulus spacer. The methods are based on the use of an apparatus, such as a tool head, that is inserted inside a pressure tube.

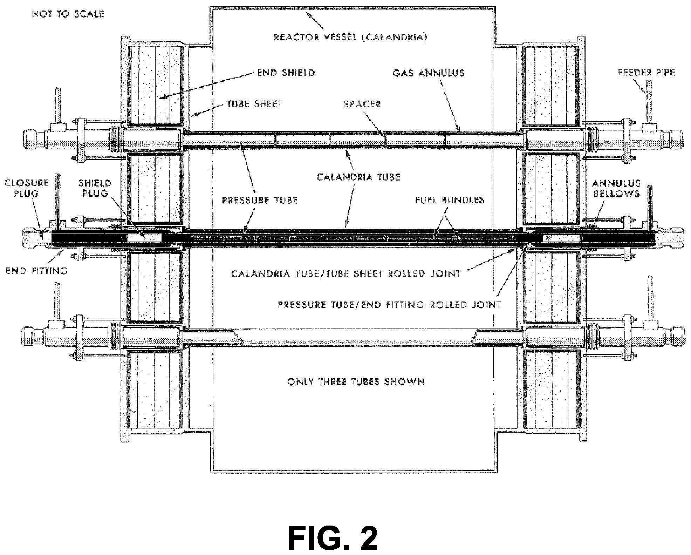

In the case of a nuclear reactor, such as a CANDU® reactor, the apparatus (tool head) is inserted in a pressure tube when the reactor is shut down. Figure 2 depicts an example of an arrangement of components within a CANDU® reactor. The apparatus (tool head) is delivered into the pressure tube using standard, existing delivery machines. The delivery machine is positioned at one end of the fuel channel and can form a sealed connection with the fuel channel end. The delivery machine is able to remove the closure plug from the end of the fuel channel to allow access to the pressure tube. The delivery machine can introduce tooling into a CANDU® fuel channel and position it at any length along the fuel channel. The delivery machine provides a mechanical interface for positioning the tool and provides for service connections to the tool, such as electrical power, control/feedback signals, pneumatic supply, or hydraulic supply. An example of a suitable delivery machine is the AECL Fuel Channel Inspection System.

Specifications may define a desired position of spacers along the length of the fuel channel, as well as a preferred orientation of spacers. Specifically, each spacer has a hooked connection where the ends of the spacer join one another. In some embodiments, it is desired to position spacers such that the hooked connection is positioned above the pressure tube.

Methods and apparatus described herein allow for moving of spacers in multiple degrees of freedom, such that spacers may be moved to desired location and orientation. As will be described in further detail, movement of spacers may be achieved by introducing vibrations to the pressure tube. Motion of spacers may be controlled by modulating parameters such as the mode of vibration, shape of the associated tube deflection, physical location of vibration input and damping, restraint or reflection of vibrations. Such techniques may permit manipulation of spacers in otherwise difficult-to-access locations.

Over the life of a pressure tube, the tube's shape may change. For example, the tube may sag due to creep. Sagging pressure tubes may rest and bind against spacers. In addition, spacers may migrate away from their original positions over time.

### Tool head

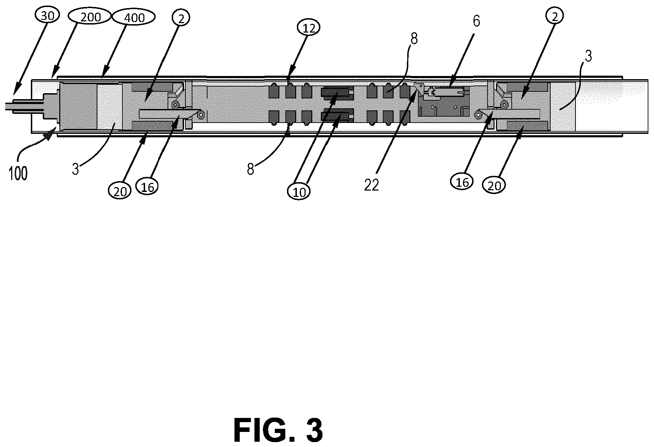

Referring now to Figure 3, tool head 100 is sized for insertion within a first tube, such as pressure tube 200 in a nuclear reactor, and comprises actuators and sensors used for annulus spacer detection, repositioning, and detection/repositioning. Tool head 100 is configured for operative association with a delivery machine (not shown), and is suitable for use in a wet environment as would be present in pressure tube 200 and outer calandria tube 400, for example, in a CANDU® reactor. One or more annulus spacer(s) 12 may be disposed between pressure tube 200 and calandria tube 400. One such annulus spacer 12 is shown in Figure 3.

Tool head 100 comprises clamping block assembly 2, coupling 16, piezo-actuator 6, accelerometer 8 and eddy current gap probe 10.

### Clamping block assembly

As shown in Figure 3, tool head 100 includes clamping block assemblies 2 at a first end and at a second end of tool head 100. Each clamping block assembly 2 includes clamping member(s) 20, which are moveable from a retracted position to an extended position by an actuator 16. In the retracted position, clamping member(s) 20 do not impede movement of tool head 100 within pressure tube 200. In the extended position, clamping member(s) 20 engage the inner surface of pressure tube 200. While engaged with pressure tube 200, clamping members 20 vibrationally isolate a section of pressure tube 200 between the respective clamping members. That is, clamping members bias against pressure tube 200 and resist deflection of the pressure tube 200 such that propagation of vibrations past clamping members 20 may be substantially prevented. Desirably, clamping member(s) 20 do not damage, or do not damage beyond acceptable tolerances, the inner surface of pressure tube 200. The shape and material composition of clamping members 20 may be designed to control reflection of vibrations in pressure tube 200, which may aid in detection and repositioning of spacers.

In the depicted embodiment, actuator 16 is a wedge mounted within the tool head and movable along the tool's longitudinal axis. Actuator 16 may be movable, for example, by hydraulic pressure supplied from the delivery machine or using a leadscrew or the like. Movement of actuator 16 by hydraulic pressure causes the wedge to bear against an inclined surface of clamping members 20, which in turn biases clamping members 20 outwardly against the wall of pressure tube 200.

Tool head 100 further includes a jacking mechanism 3 at each of the first and second ends. Jacking mechanisms 3 are movable between engaged positions in which they contact the inner wall of pressure tube 200 and retracted positions, in which they do not contact pressure tube 200. Jacking mechanisms 3 are operable to exert a force on the pressure tube in the engaged positions, producing a bending moment in pressure tube 200. This moment applied to pressure tube 200 urges pressure tube 200 upwardly between jacking mechanisms 3. In other words, jacking mechanisms 3 effectively lift pressure tube 200 away from calandria tube 400 in a region between the jacking mechanisms 3. Two jacking mechanisms 3 can therefore be positioned so that an annulus spacer 12 lies therebetween, and used to bend the pressure tube upwardly, removing load on an annulus spacer 12 due to the weight of pressure tube 200. In some embodiments, the bending may cause annulus spacer 12 to come out of contact with calandria tube 400. Removal of the load from an annulus spacer 12 may permit the annulus spacer 12 to be freely moved.

## Piezo-actuator

Tool head 100 includes one or more transducers such as one or more piezo-actuators 6, operable to apply vibrations to the inside surface of pressure tube 200. In the depicted embodiment, one piezo-actuator 6 is included and located at a specific position in tool head 100. However, multiple piezo-actuators 6 can be present, and may be located at different positions. As will be described in further detail, the number, relative orientation and vibration patterns of piezo-actuators 6 influence the vibration created in pressure tube 200. For example, the mode, frequency and magnitude of vibration may depend on the number of piezo-actuators, the positions and relative orientations of the piezo-actuators, the magnitude and frequency of vibrations and any phase shift between such vibrations.

Each piezo-actuator 6 includes a piezo actuating button 22 that is movable from a retracted position to an extended position. In the retracted position, piezo actuating button 22 does not impede movement of tool head 100 within pressure tube 200. In the extended position, piezo actuating button 22 is brought into contact with the inner wall of pressure tube 200.

The position of piezo-actuator 6 with respect to each clamping block assembly 2 affects the frequency and amplitude of vibrations the piezo-actuator 6 can introduce in the pressure tube 200. Piezo-actuator 6 has limitations with respect to its travel (or stroke) and the force that it can apply. The amount of force and stroke required to vibrate pressure tube 200 is dependent on the location of piezo-actuator 6 with respect to the mode shape, and therefore, also with respect to the clamping block assemblies 2, which define the length of the segment of the vibrating pressure tube, and thereby affect the modes of vibration. There is a location or a location range that allows piezo-actuator 6 to better produce the desired mode shape or shapes. In general, a balance has to be achieved between force and stroke. Typically, a location that requires less stroke also requires more force, and vice versa. The performance characteristics of piezo-actuator 6 is matched to the force and stroke requirements of the particular mode shape or shapes.

When piezo actuating button 22 is in contact with the inner wall of pressure tube 200, piezo-actuator 6 is operable to vibrate a portion of pressure tube 200 in a controlled manner. Piezo-actuator 6 is controlled using an amplifier (not shown) and signal generator (not shown), such that it can be made to operate at a desired frequency. The frequency of vibration of piezo-actuator 6 selected will depend on a variety of non-limiting factors such as operating conditions, materials used, user preference, regulatory requirements and/or the like. In one embodiment, piezo-actuator 6 generates vibrations at a natural frequency of pressure tube 200. In one embodiment, piezo-actuator 6 generates vibrations in the frequency range of about 100 Hz to about 1500 Hz.

As noted above, each clamping block assembly 2 and assembly clamping members 20 are operable to vibrationally isolate the section of pressure tube 200 between each clamping block assembly 2, at the first and second ends of pressure tube 200. Prior to actuation of piezo-actuator 6, assembly clamping members 20 may be moved to the extended position, contacting the inner surface of pressure tube 200. When assembly members 20 are in the extended position, the portion of pressure tube 200 between each clamping block assembly 2 is vibrationally isolated from the remainder of pressure tube 200. As used herein, vibrationally isolated is understood to mean that vibrations produced by piezo-actuator 6 within the region of pressure tube 200 bounded by clamping members 20, are kept apart or away from the remainder of pressure tube 200 so as to minimize or eliminate the effect of vibrations on the remainder of pressure tube 200.

## Accelerometers

Tool head 100 includes transducers or vibration sensors such as accelerometers 8, which detect vibrations of pressure tube 200. Accelerometer(s) 8 may also be used to detect impacts between annulus spacer 12 and the outer surface of pressure tube 200 during movement of annulus spacer 12 (discussed further below).

The number and positioning of accelerometer(s) 8 in tool head 100 vary with the intended use. The accelerometers are typically used in pairs, with a pair consisting of two accelerometers 8 located at generally the same axial position in the tool, oriented 180 degrees from one with one another. For example, one accelerometer 8 may be positioned to measure acceleration at the vertical top of the pressure tube 200 and one accelerometer 8 may be positioned to measure acceleration at the vertical bottom of the pressure tube 200. In the depicted embodiment, two pairs of accelerometers are present. One pair of accelerometers 8 is located closer to the end of tool head 100 at which the delivery tool is attached (referred to as the ram-end) and the other pair of accelerometers 8 is located closer to the opposite end of the tool head (referred to as the free-end).

In other embodiments, additional accelerometer 8 pairs may be used. In some embodiments, tool head 100 includes twelve accelerometers 8 mounted as six pairs. Such embodiments may provide three accelerometer 8 pairs on each side of the tool, i.e. on both sides of the tool's axial centreline, allowing the tool head to measure the position of annulus spacer 12 on both sides of the tool head. In other embodiments, there are six accelerometers 8 (three pairs) located on one side of the tool axial centre. In a specific embodiment of the invention, the tool incorporates means for moving the accelerometers axially within the tool to improve the detection resolution. This may be accomplished by mounting accelerometers 8 in a moveably attached component within tool head 100 which may be moved axially within tool head 100 by any standard mechanical means such as an electric motor and leadscrew or a hydraulic cylinder.

## Eddy current gap measurement probe

Tool head 100 also includes eddy current gap measurement probe 10 to obtain measurements to confirm that annulus spacer 12 is in the unloaded position following pressure tube jacking. Such use of eddy current gap measurement probe 10 is known to the skilled worker. In the embodiment of Figure 3, tool head 100 includes two eddy current gap probes 10 to enable the gap above and below the pressure tube 200 to be measured simultaneously. In other embodiments, there is only one eddy current gap probe 10 to measure the gap below the pressure tube 200. In a specific embodiment, tool head 100 includes three eddy current gap probes 10 to measure the gap above, below, and to one side of the pressure tube 200. In some embodiments, the tool head 100 can be rotated to position the eddy current gap probes for measuring the gap in other orientations.

## Umbilical

Tool head 100 is configured for operative association with umbilical 30. Umbilical 30 includes appropriate electrical cables and hydraulic and/or pneumatic hoses to connect tool head 100 to an out-of-reactor power unit and control system (not shown). Out-of-reactor power unit includes a hydraulic power supply (pump, valves) and electrical power supplies. This unit is a source of power and amplification, and may be positioned adjacent to the reactor, proximal to the services for the delivery machine.

## Control station

Tool head 100 is operable from a control station (not shown), which is desirably located in a low radiation environment, away from the reactor. The control station includes such items as signal conditioning for transducers, means for data acquisition and an operator interface. Special purpose software is included to control tool head 100 and analyse the data resulting from annulus spacer 12 detection, movement and/or detection and movement processes. Dedicated procedures, outlined for example in user manuals, are included to guide/instruct operators in annulus spacer 12 detection and/or annulus spacer 12 repositioning. It will be clear that tool head 100 can be included as a kit, to retrofit existing machines.

## Methods

During operation of a reactor, it may be possible for annulus spacer(s) 12 to move axially along pressure tube 200. This movement of annulus spacer(s) 12 can result, for example, from vibration, thermal cycling of the reactor, creep of the pressure tube or calandria tube. When axial movement of annulus spacer(s) 12 occurs, it may be necessary or desirable to reposition annulus spacer(s) 12. Alternatively or additionally, it is possible that initial placement of annulus spacer(s) 12 is not optimal or desired, and here again it may be necessary or desirable to reposition annulus spacer(s) 12, from a first position to a second position.

Tool head 100 may be used, for one or more annulus spacer(s) 12, for (i) detecting annulus spacer 12, (ii) repositioning annulus spacer 12, and/or (iii) detecting annulus spacer 12 during repositioning. Vibration-based techniques are used for both detection and repositioning of annulus spacer 12. The following discussion provides details of methods of using the apparatus, in an embodiment, tool head 100, to detect and/or reposition an annulus spacer; however, it will be clear that variations can be made to the following methods while not deviating from the present disclosure. Such methods are within the scope of the present disclosure.

## Annulus Spacer Detection

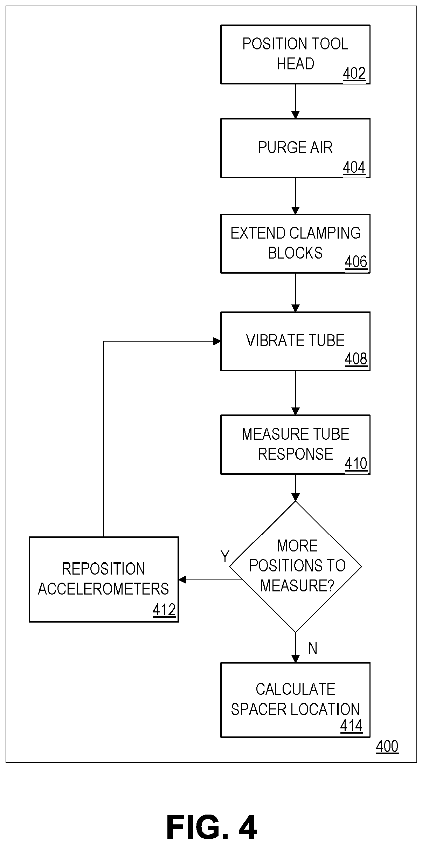

Figure 4 is a flow chart depicting an example method 400 of detecting annulus spacer 12. At block 402, tool head 100 is inserted into pressure tube 200 and positioned near the expected location of annulus spacer 12.

Typically, tool head 100 is inserted in a wet pressure tube 200. That is, tool head 100 is inserted while pressure tube 200 is filled with fluid passing therethrough. At block 404, air is purged from the tool head 100. Components of tool head 100 are cycled to release any air bubbles trapped during insertion of tool head 100 in pressure tube 200. For example, piezo actuators 6, accelerometers 8 and clamping block assemblies 2 are extended and retracted. Purging air may also include rotating the tool head 100 clockwise and counter-clockwise through about 180 degrees.

At block 406, clamping block assemblies 2 are extended so that clamping members 20 engage pressure tube 200 and vibrationally isolate a region of pressure tube 200.

At block 408, piezo actuators 6 and accelerometers 8 are extended into contact with pressure tube 200 and piezo actuators 6 introduce an excitation signal to pressure tube 200 to vibrate pressure tube 200.

At block 410, response to the excitation signal is measured by accelerometers 8. Each accelerometer 8 measures the motion of the wall of pressure tube 200 adjacent the accelerometer, and the motion measurements are used to characterize the local response of pressure tube 200. The response may be a combination of vibrations at one or more frequencies, amplitudes and phases.

In some embodiments, characterization of the measured motion is done by determining amplitude of oscillations at one or more frequencies. In such analysis, annulus spacer 12 is expected to constrain the motion of pressure tube 200, either directly or by pinching between pressure tube 200 and calandria tube 100. However, the effect of such constraining is generally observed only within a small region around annulus spacer 12.

In other embodiments, characterization of the measured motion may take into account characteristics other than amplitude. For example, motion measurements may be assessed using algorithms based on converting the measured response into a frequency-domain function, and comparing frequency response, amplitude and phase of the response at certain characteristic frequencies.

Measurements are taken at defined intervals along the length of the isolated portion of pressure tube 200. After a measurement, if more positions remain to be measured, at block 412, accelerometers 8 are retracted and repositioned within the tool head 100 to a different location along the axis of the pressure tube 200. The process then returns to block 408, and the response of pressure tube 200 to excitation by piezo-actuators 6 is measured at block 410 by accelerometers 8. In an example, measurements are taken at intervals of 20 mm. However, in other embodiments, measurements may be taken at different spacing. Smaller intervals may provide greater detection accuracy.

If all positions have been measured, at block 414, the measurements are compared to determine if there is a location for which the measurements are indicative of damping by the annulus spacer 12.

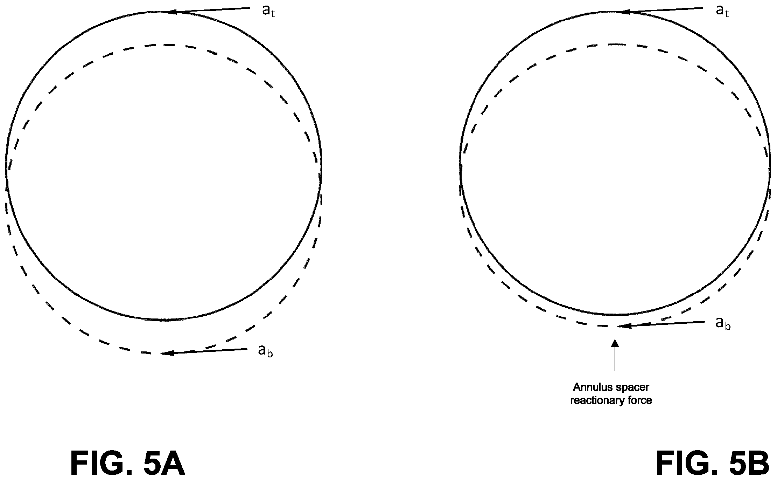

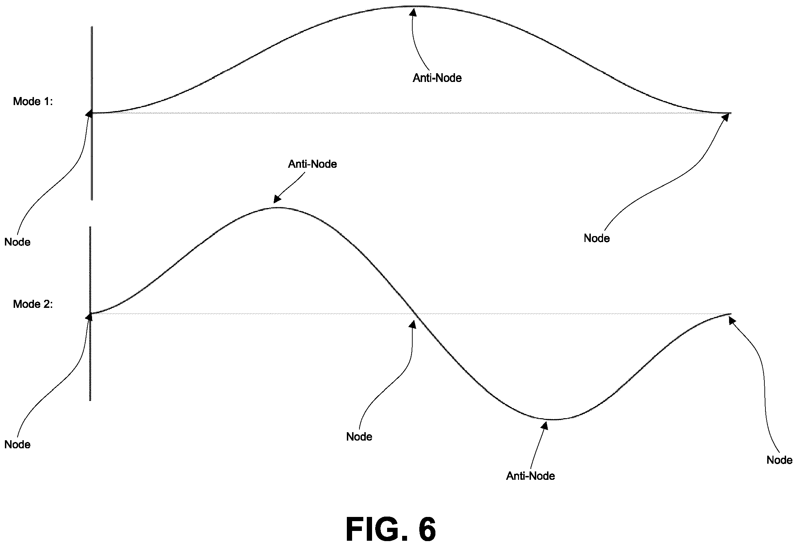

Figures 5A-5B and 6 depict example responses of pressure tube 200 to vibratory excitation. Figure 5A depicts a circular cross-section view of response in the absence of annulus spacer 12. Figure 5B depicts a circular cross-section view of response adjacent to annulus spacer 12.

Detection of the position of annulus spacer 12 is based on the differences in the vibration responses at the top and bottom of pressure tube 200 vibrating in the vicinity of a loaded annulus spacer 12. Annulus spacer 12 primarily contacts calandria tube 400 near the bottom of the tube, and transmits force to the pressure tube 200 primarily at this location. Detection is achieved by exciting a random vibration in pressure tube 200 using piezo-actuator 6 and measuring the response of pressure tube 200 at both a top position and a bottom position of pressure tube 200 using accelerometers 8 at three or more axial locations. The acceleration is monitored at the natural frequencies of the pressure tube section, where the expected maximum accelerations are highest. The presence of annulus spacer 12 alters the local acceleration and deflection of the pressure tube wall, primarily at the bottom of pressure tube 200. This produces an asymmetry in the circumferential mode shape. In use, tool head 100 is positioned inside pressure tube 200 and random vibrations are excited using tool piezo-actuator 6.

A comparison between the pressure tube acceleration at the top position and the bottom position is performed at multiple axial positions, identifying spacer location(s), is illustrated in the views provided in Figures 5A and 5B. Figure 5A depicts a simplified axial cross section view of a beam mode in a pressure tube. Acceleration measurements are taken at the top position and the bottom position, designated $a_t$ and $a_b$, respectively, in Figures 5A and 5B. Figure 5B shows a simplified view of the "modified" beam mode as it is affected by the reactionary force from a loaded annulus spacer 12. The presence of annulus spacer 12 is determined by comparing measurement $a_t$ and $a_b$ at various axial locations along pressure tube 200. In the absence of annulus spacer 12, the absolute value of $a_t$ and $a_b$ are approximately equal. However, when a loaded annulus spacer 12 is present, there is a difference between $a_t$ and $a_b$. The value of $a_b$ is reduced typically in the range of 20-40% compared to the value of $a_t$. At any given frequency, the ratio of the absolute value of the acceleration measured at the top and bottom of the pressure tube is defined as the frequency response function at that frequency.

Figure 6 depicts plots of the first and second axial mode shapes ("Mode 1" and "Mode 2") for a clamped-clamped beam. As used herein, "clamped-clamped beam" can be established with tool head 100 positioned in a desired location of pressure tube 200, and each clamping block assembly 2 is actuated to move assembly clamping member 20 from the retracted position to the extended position, thereby vibrationally isolating a portion of pressure tube 200.

As shown in Figure 6, in response to vibratory excitation by the piezo-actuators 6, pressure tube 200 vibrates in a wave pattern, defining a series of anti-nodes (peaks and valleys) at which the pressure tube 200 deflects from its nominal dimensions, and nodes, at which the pressure tube does not deflect substantially from its nominal dimensions.

As shown in Figure 5B, annulus spacer 12 tends to restrain deflection of pressure tube 200. For example, tension in annulus spacer 12 may resist outward deflection. Thus, the amplitude of deflection in the vicinity of annulus spacer 12 is reduced relative to portions of pressure tube 200 that are farther from the annulus spacer 12.

Spacer 12 may also cause asymmetry of vibration of pressure tube 200. On one side of the pressure tube 200, vibration may cause the annulus spacer 12 to contact the calandria tube 400. On the other side, there may be more clearance between the pressure tube 200 and calandria tube 400, such that vibration does not cause contact with calandria tube 400. Accordingly, in the vicinity of spacer 12, accelerometers 8 on opposite sides of the pressure tube 200 but at the same longitudinal position may produce different measurements.

Annulus spacer 12 may also cause a phase shift in the vibration of pressure tube 200. That is, vibration of pressure tube 200 may be delayed in the vicinity of annulus spacer 12.

The location of annulus spacer 12 is determined by converting the signals measured by accelerometers 8 into frequency-domain amplitude and phase signals. In the equations below, "R" is used to indicate a function in the time domain, and "S" is used to indicate a function in the frequency domain.

An example technique for correlating the signals is, for each top-bottom pair of accelerometers 8 at each longitudinal position, to model one accelerometer 8 (e.g. the top accelerometer 8) as a vibration source signal and the other accelerometer 8 (e.g. the bottom accelerometer 8) at the same longitudinal position as a response signal. A frequency response function (H1) may then be defined as the ratio of a cross-spectrum between the vibration source and vibration response to an auto-spectrum of the vibration source, for example:

$$H_1 = H_{xy} = S_{xy}/S_{xx}$$

Where:

$H_1$ is a frequency response function
$S_{xy}$ is a Cross-Spectrum between the input (excitation) signal and output (response) signal
$S_{xx}$ is an Auto-Spectrum of the input (excitation) signal

In another embodiment, a frequency response function (H2) may be defined as the ratio between an auto-spectrum of the vibration response and the cross-spectrum between the vibration source and vibration response, for example:

$$H_2 = H_{xy} = S_{yy}/S_{xy}$$

Where:

$H_2$ is a frequency response function

$S_{xy}$ is a Cross-Spectrum between the input (excitation) signal and output (response) signal

$S_{yy}$ is an Auto-Spectrum of the response (receiving) signal

The Cross-Spectrum is obtained in the frequency domain as the product between the Fourier Transform of the output signal and the complex conjugate of the Fourier Transform of the input signal.

$$S_{xy}(f) = [S_y(f)S_x^*(f)]$$

$S_y(f)$ is a Fourier Transform of the time domain output signal

$S_x^*(f)$ is a complex conjugate of the Fourier Transform of the time domain input signal

The cross correlation function defined in the time domain, compares two signals as a function of time lag between them. In the time domain the cross correlation function is defined as:

$$R_{xy}(\tau) = \lim_{T \to \infty} \frac{1}{T} \int_T x(t)y(t+\tau)dt$$

The Auto Spectrum in the frequency domain is defined as the product between the Fourier Transform of the input signal and the complex conjugate of the Fourier Transform of the input signal.

$$S_{xx}(f) = [S_x(f)S_x^*(f)]$$

$S_x(f)$ is a Fourier Transform of the time domain input signal

$S_x^*(f)$ is a complex conjugate of the Fourier Transform of the time domain input signal

The Auto Spectrum in the frequency domain of the output signal may be defined in a similar manner.

In the time domain the Auto Correlation function involves applying a time lag to a signal and then multiplying this new signal by the original signal. Repeating the process over all time and averaging the results produces the Auto Correlation value. The mathematical definition is as follows:

$$R_m(\tau) = \lim_{T \to \infty} \frac{1}{T} \int_T x(t)x(t+\tau)dt$$

The Auto Correlation in the time domain of the output signal may be defined in a similar manner.

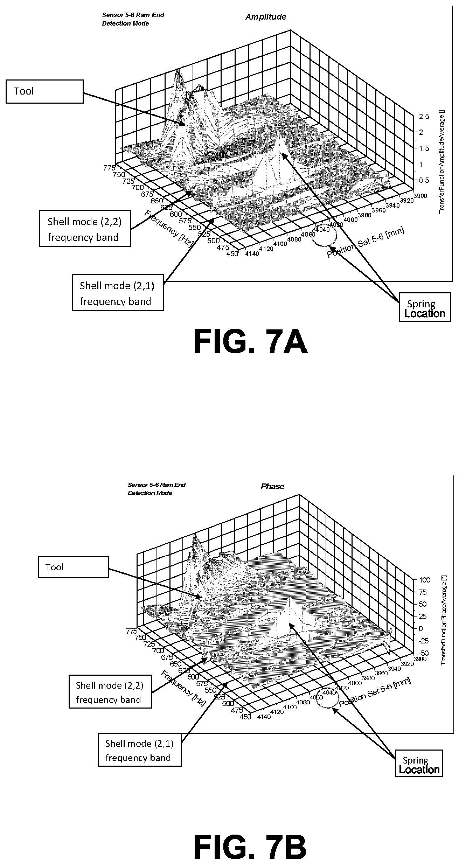

The frequency response function is plotted over the length of the pressure tube 200 to identify locations where the ratio is large, indicating large differences between phase and amplitude at the vibration source signal and the vibration response signal. Figures 7A-7B depict example plots of amplitude and phase. The "shell modes" indicated in Figures 7A-7B are shell modes of the pressure tube 200, and the plotted "tool" indicates the signature of components belonging to tool head 100. In the depicted example, the position of annulus spacer 12 is apparent in both plots from a peak that coincides with a resonant frequency band. The peaks indicate asymmetry and a phase shift in the measured vibration. Both peaks are located at 4040 mm in the plot, indicating that annulus spacer 12 is located at the same position.

As noted, in the depicted embodiment (shown in Figure 3), two pairs of accelerometers 8 are present; a ram-end pair and a free-end pair. The above analysis may produce four distinct estimates of the location of annulus spacer 12, namely, estimates based on the amplitude ratio and phase ratio for the ram-end accelerometer and for the free-end accelerometer. In order to produce a single predicted location, the amplitude-based and phase-based locations at each end are averaged. The resulting free-end and ram-end values are again averaged to produce a final predicted value. Each average may be subject to a maximum difference, e.g. 5 mm. For example, the amplitude-based and phase-based locations at the free-end are averaged, provided the difference between the values is less than the maximum. If the difference is greater than the maximum, an output may be produced indicating that a spacer was not located.

In some embodiments, annulus spacer 12 may be detected based on an algorithm including one or more additional criteria. One example algorithm includes primary, secondary and tertiary criteria. The first criterion is based on threshold values of an amplitude ratio between accelerometers and a relative phase function between accelerometers. The second criterion is based on threshold values of the relative phase function and standard deviation of frequency response functions at the accelerometers. The third criterion is based on the amplitude ratio and standard deviation of frequency response functions. If all three criteria are positive at a particular position, i.e. if all three criteria indicate the presence of annulus spacer 12, the position is logged as the spacer location. Alternatively, the three criteria may be presented on an interface to prompt a user input to log a location of annulus spacer 12.

## Annulus Spacer Repositioning

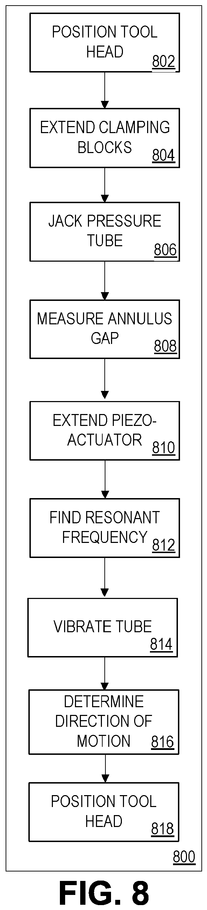

Repositioning of annulus spacer 12 is achieved by vibrating a section of the pressure tube in a controlled manner. Figure 8 is a flow chart depicting an example process 800 of repositioning a spacer. At block 802, tool head 100 is positioned within pressure tube 200 at a desired location with respect to annulus spacer 12, based on detection of the spacer's location as described above. At block 804, with tool head 100 positioned in the desired location, each clamping block assembly 2 is actuated to move assembly clamping member 20 from the retracted position to the extended position, thereby vibrationally isolating a portion of pressure tube 200. This vibrational isolation provides a standard fixed length of pressure tube 200 located between the two clamping block assemblies 20 for the vibration-based repositioning of annulus spacer 12.

After some period of operation of a reactor, annulus spacer 12 may be in contact with pressure tube 200 and outer calandria tube 400 (a loaded condition). For example, pressure tube 200 may creep over time such that it rests against the spacer 12, pinching the spacer 12 between pressure tube 200 and calandria tube 400. For repositioning of annulus spacer 12, annulus spacer 12 is brought out of contact with calandria tube 400 (an unloaded condition), to free annulus spacer 12 for movement. At block 806, annulus spacer 12 is unloaded by applying a moment of force to pressure tube 200 using tool head 100. This procedure is referred to as pressure tube jacking or jacking.

At block 806, jacking mechanisms 3 of tool head 100 is used to apply a moment of force to pressure tube 200, to raise the pressure tube 200 and remove the load from the annulus spacer 12.

Tool head 100 is configured to apply a moment of force to pressure tube 200, using jacking mechanisms 3. To apply a moment of force, tool head 100 is positioned within pressure tube 200 and clamping member(s) 20 are in the extended position. Each jacking mechanism 3 is rotated (in opposite direction to one another) and a moment of force is applied in the vertical plane parallel to the pressure tube axis. The applied moment of force effectively lifts inner pressure tube 200 off outer calandria tube 400, thereby taking annulus spacer 12 out of contact with calandria tube 400 and freeing annulus spacer 12 for movement. Thus, by applying the moment of force to pressure tube 200, annulus spacer 12 is moved from the loaded condition to the unloaded condition. Such pressure tube jacking is also used in the case of a type of annulus spacer known as a loose-fit spacer. In some instances, if the annulus spacer were normally in the unloaded condition, it is possible to move a snug-fitting annulus spacer 12 without jacking the pressure tube.

In an example, jacking may be performed by progressively exerting force using jacking mechanisms 3 to progressively bend pressure tube 200 upwardly. Force exerted by the jacking mechanisms 3 may be controlled, e.g. by pressure in a hydraulic control line. Pressure may be applied in discrete increments, e.g. 0.2 MPa, until the top of pressure tube 200 pinches annulus spacer 12 against calandria tube 400. Pressure may then slowly be released, allowing pressure tube 200 to relax until annulus spacer 12 is free both above and below pressure tube 200. At block 808, unloading of annulus spacer 12 is confirmed by measuring the pressure tube-to-calandria tube gap using eddy current gap probe 10. Eddy current gap probe 10 may also provide information used to determine the amount of moment necessary to apply to pressure tube 200.

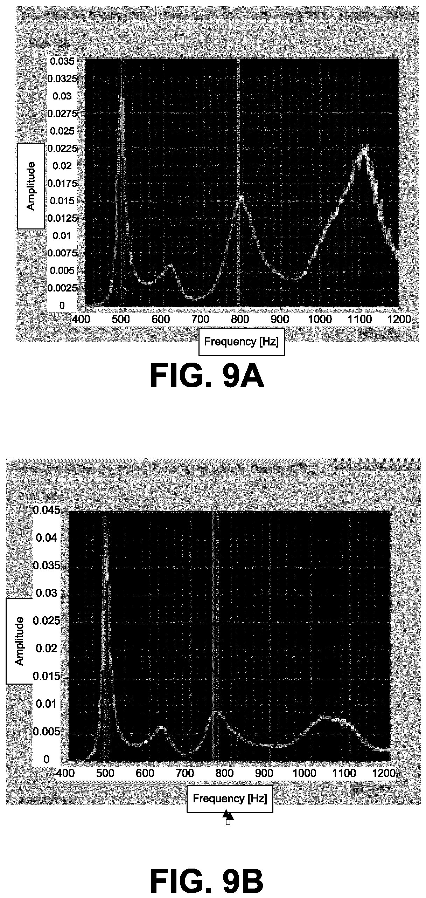

In another example, jacking may be performed by applying pressure to a first threshold value, e.g. 3.5 MPa, at which it is known that annulus spacer 12 is in contact with pressure tube 200 and calandria tube 400. Piezo-actuators 6 vibrate pressure tube 200 and accelerometers 8 measure the response. The response is converted to frequency domain to obtain a characteristic response function for the tube with annulus spacer 12 pinched between pressure tube 200 and calandria tube 400. An example function is depicted in Figure 9A, illustrating a frequency-domain plot of a response function with annulus spacer 12 pinched between pressure tube 200 and calandria tube 400, according to an embodiment.

A much larger pressure which is believed to be sufficient to unload spacer 12 may then be applied. Piezo actuators 6 again vibrate pressure tube 200 and the resulting response is measured by accelerometers 8 and converted to frequency domain. An example function after jacking to a high pressure level is shown in Figure 9B, illustrating a frequency-domain plot of a response function with unloaded annulus spacer 12 between pressure tube 200 and calandria tube 400, according to an embodiment. Major differences in the response function confirm that pressure tube 200 has been lifted such that annulus spacer 12 is no longer pinched between pressure tube 200 and calandria tube 400. This process may be completed in less time than jacking in discrete pressure increments. At block 810, with tool head 100 in position, and annulus spacer 12 in the unloaded position, bearing pad 22 within piezo-actuator 6 is moved from the retracted position to the extended position. Accelerometers 8 are likewise extended into contact with pressure tube 200.

At block 812, piezo-actuators 6 are operated to vibrate the pressure tube 200 to determine a resonant frequency of the isolated tube portion. Piezo-actuators 6 vibrate pressure tube 200 through a range of frequencies and the response is measured by accelerometers 8. The response is logged to identify one or more frequency bands at which resonant vibration occurs. In some embodiments, multiple resonant frequencies may be identified, corresponding to different modes of resonant vibration. Typically the (2,1) mode is used for spacer repositioning as this mode provides for the highest efficiency in terms of power provided by the piezo-actuator versus peak pressure tube acceleration produced. In some examples, with a vibrating tool length of 700mm, the (2,1) mode of resonant vibration occurs between 450 Hz and 500 Hz. Other modes of resonant vibration are possible.

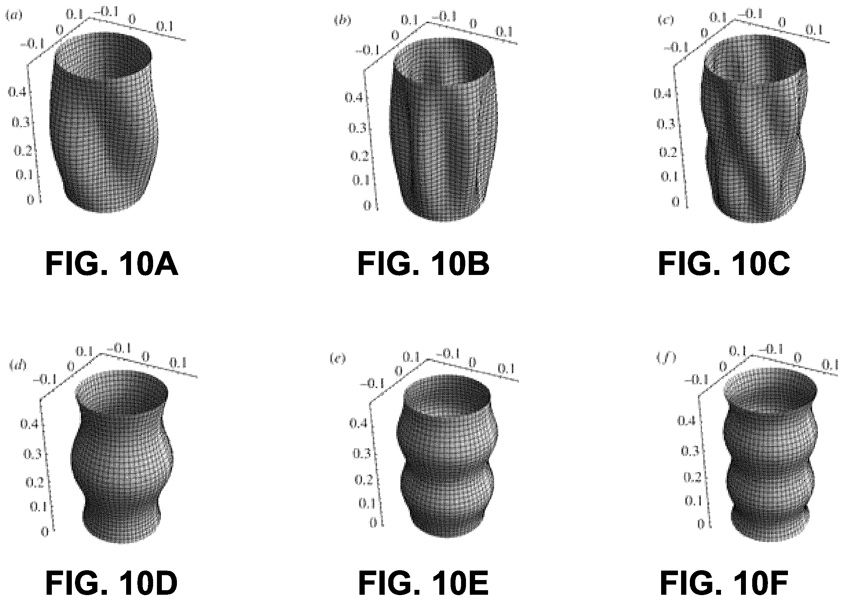

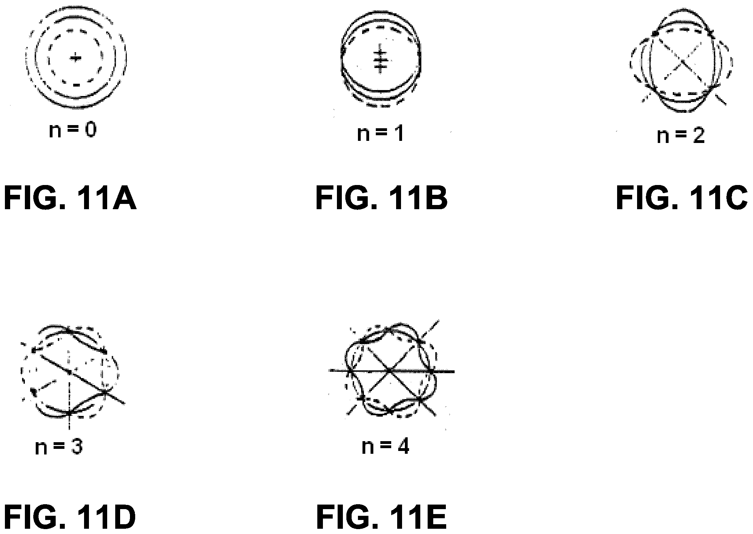

Figures 10A-10F depict example resonant vibration modes of a clamped cylindrical shell, such as pressure tube 200. The vibration modes are characterized by longitudinal vibration and circumferential vibration. Figure 10A depicts a (3,1) mode of vibration, that is, a mode 3 circumferential vibration and a mode 1 longitudinal vibration. Figures 10B through 10F depict mode (6,1), (6,2), (0,1), (0,2) and (0,3) vibrations, respectively. Figures 11A-11E depict circumferential vibration modes 0 through 4, respectively.

At block 814, piezo-actuators 6 are used to vibrate the pressure tube 200 at the selected resonant frequency.

The vibrations cause annulus spacer 12 to vibrate as well. These vibrations in annulus spacer 12 produce accelerations that are high enough to overcome the spring tension in the annulus spacer 12 and allow the annulus spacer 12 to lift off of the surface of the pressure tube, allowing movement of annulus spacer 12 relative to pressure tube 200. Specifically, deflection of pressure tube 200 in response to vibration by piezo-actuators 6 may urge annulus spacer 12 to move along the length of the pressure tube 200. The direction, speed and distance of movement may depend on a number of factors such as the frequency at which pressure tube 200 is vibrated and the associated resonant vibration mode; the initial distance between annulus spacer 12 and piezo-actuators 6; the magnitude of vibration by piezo-actuators 6; and the length of time that vibration or excitation is applied. A variety of resonance mode shapes may be used. The greater the mode number desired for use, the greater the amount of power that is required to produce an equivalent acceleration. During vibration of pressure tube 200, accelerometers 8 measure and record the response of pressure tube 200.

## Annulus spacer monitoring during repositioning

At block 816, the movement of annulus spacer 12 is monitored during movement of annulus spacer 12 to identify the direction of movement of annulus spacer 12. This is carried out using accelerometers 8 to detect impacts between annulus spacer 12 and pressure tube 200 as annulus spacer 12 vibrates during movement.

Vibrations measured by accelerometers 8 during excitation of pressure tube 200 include resonant vibration of pressure tube 200, along with vibration from other sources, such as vibration of annulus spacer 12, impacts (e.g. rattling) of spacer 12 against pressure tube 200, vibrations of tool head 100 or components thereof, and other noise.

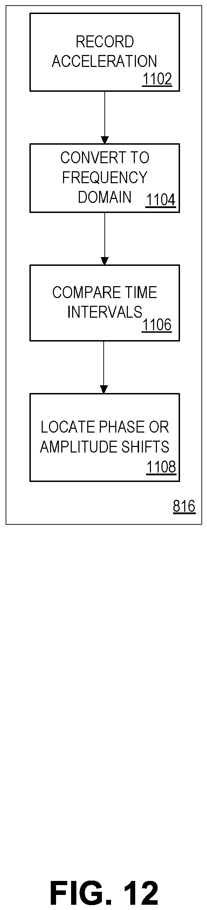

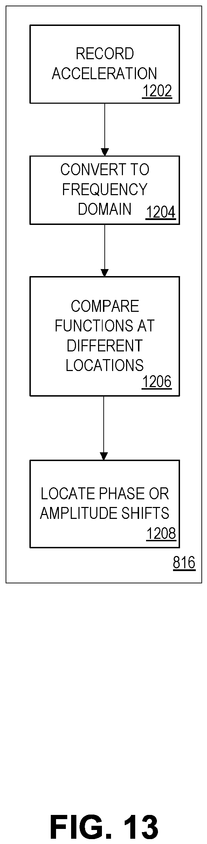

Figures 12 and 13 are flow charts depicting example methods carried out at block 816 for detecting movement of annulus spacer 12 based on vibrations detected by accelerometers 8.

Referring to Figure 12, at block 1102, accelerometers 8 measure and record vibrations of pressure tube 1102 in response to excitation by piezo-actuators 6.

At block 1104, the measurements acquired by accelerometers 8 are converted to frequency-domain functions, e.g., using a fast fourier transform (FFT) algorithm. The measurements may be converted to frequency-domain amplitude and phase functions for each of a plurality of discrete time intervals. For example, excitation of pressure tube 200 may occur over a measurement period, e.g. 3 seconds, which may be broken down into intervals of 10 ms. The vibration measurements corresponding to each interval may be converted to separate frequency-domain functions.

At block 1106, the phase function for the first time interval is compared to the phase function for each subsequent interval. Likewise, the amplitude function for the first time interval is compared to the amplitude function for each subsequent time interval. Comparisons may be done, for example, by computing the cross-spectrum as described above with reference to spacer detection, by constructing waterfall plots, or by other suitable techniques.

At block 1108, based on the comparisons, any changes in amplitude or phase in a particular frequency band are identified. Such changes may be interpreted as indicating motion of annulus spacer 12. In particular, increasing phase angle at a particular frequency indicates that the response function for that frequency is delayed at later time intervals relative to the first time interval. Such behaviour is consistent with the spacer moving away from the accelerometer 8 - as distance between the accelerometer 8 and the annulus spacer 12 increases, the time for a vibration to propagate from the annulus spacer 12 to the accelerometer 8 likewise increases. Similarly, decreasing amplitude at a particular frequency is consistent with vibration propagating through an increasing distance and therefore decaying. In some embodiments, only measured changes above a minimum threshold magnitude are interpreted as being correlated to movement of annulus spacer 12. Changes below the threshold magnitude are considered to be associated with noise, rather than movement of annulus spacer 12 and are therefore disregarded.

Figure 13 shows another process that can be performed at block 816 instead of or in addition to that shown in Figure 12.

At block 1204, the measurements acquired by accelerometers 8 are converted to frequency-domain functions, e.g., using a fast fourier transform (FFT) algorithm. The measurements may be converted to amplitude and phase functions in the frequency domain. Functions may be computed for each time interval. Separate functions are obtained for the accelerometers 8 at the ram-end of tool head 100 and for the accelerometers 8 at the free-end of tool head 100.

At block 1206, the phase functions for an accelerometer at a first location (e.g. the free-end accelerometer) are compared to the phase functions for an accelerometer at another location (e.g. the ram-end accelerometer). Likewise, the amplitude functions for the accelerometer at the first location are compared to the amplitude functions for the accelerometer at the other location. Comparisons may be done, for example, by computing the cross-spectrum as described above with reference to spacer detection, by constructing waterfall plots, or by other suitable techniques.

At block 1208, based on the comparisons, differences in between the two accelerometers are evaluated over time. For example, changes in relative phase between accelerometers at any particular frequency band are identified. Likewise, relative amplitude changes at any particular frequency band are identified. Such changes may be interpreted as indicating motion of spacer 12. For example, a change in relative phase at a particular frequency is consistent with an increase in propagation delay to one accelerometer relative to the other, and therefore, movement of annulus spacer 12 towards one accelerometer and away from the other. Similarly, a change in relative amplitude at a particular frequency is consistent with changing distance between annulus spacer 12 and each accelerator 8, and corresponding change in vibration decay as the vibration propagates through pressure tube 200. In some embodiments, only measured changes above a minimum threshold magnitude are interpreted as being correlated to movement of spacer 12. Changes below the threshold magnitude are considered to be associated with noise, rather than movement of spacer 12 and are therefore disregarded.

Detection of the direction of motion allows for confirmation that spacer 12 is being moved as intended. Conversely, if the above-described methods reveal that spacer 12 moves in the opposite direction, corrective measures may be taken.

Referring again to Figure 8, at block 818, after the direction of motion has been determined, the tool head 100 is repositioned based on an estimated new location of spacer 12. Tool head 100 then returns to the spacer detection method of Figure 4 and if necessary, to the spacer positioning method of Figure 8.

## Rotation of Spacer

In some embodiments, it may be desired to position annulus spacer 12 in a particular orientation. For example, it may be desired to position annulus spacer 12 such that its hooked ends are positioned at the top of pressure tube 200. The hooked ends may be less stiff than the coiled portion of annulus spacer 12 and therefore positioning the hooked ends on the underside of pressure tube 200 may pose a risk of crushing or otherwise damaging annulus spacer 12.

The inventors have determined that during movement of annulus spacer 12 as described above, the hooked ends of annulus spacer 12 tend to align with the principal axes of inertia of the pressure tube 200 and tool head 100. In the depicted embodiment, the principal axes of inertia are slightly offset from the axis of piezo-actuators 6, as mass is aysmmetrically distributed in tool head 100. For example, an axis of inertia may be offset from the axis of the piezo-actuators by approximately 20-30 degrees. In other embodiments, the orientation of the axis of inertia may differ. In some embodiments, the piezo-actuators 6 may be aligned with a principal axis of inertia.

In an example, annulus spacer 12 may be positioned at the desired longitudinal position as described above, then annulus spacer 12 may be rotated to the desired orientation by an additional vibration. Specifically, tool head 100 may be rotated within pressure tube 200 so that an axis of inertia is oriented approximately vertically. Piezo-actuators 6 may then introduce a vibration to pressure tube 200, causing annulus spacer 12 to rotate such that its hooked ends align with the vertical axis of inertia.

In other examples, additionally or alternatively to the above approach, the axes of inertia may be controlled by providing signals of different strength to piezo-actuators at the top and bottom of pressure tube 200, such that the combination of vibrations of differing amplitudes and the distribution of mass in tool head 100 result in a vertically-aligned axis of rotation.

## Kits

It will be clear that tool head 100, and/or components of tool head 100, can be included as a kit. Such a kit may optionally include instructions for use and/or software for operating tool head 100.

The techniques described above may be applied to locate and position objects in other systems, such as other types of annular spacers. As described above, spacers 12 are coil springs, wrapped around pressure tube 200, with ends secured to one another by hooked connection. Other types of spacers are possible. For example, some spacers may have welded ends. Other spacers may be constructed as split rings. Still other spacers may be solid.

As described above, vibrations are introduced to pressure tube 200 by piezo actuators. However, other types of vibration transducers may be used. For example, speaker coils may be used to introduce controlled vibrations.

In some embodiments, one or more transducers in tool head 100 may both apply vibrations, for example, as described above with reference to piezo-actuators 6 and detect vibrations, for example, as described above with reference to accelerometers 8, in a single transducer device.

As described above, vibratory response of pressure tube 200 is measure using accelerometers. In other embodiments, other types of measurement devices may be used. For example, vibrations may be measured with lasers. Specifically, lasers could be mounted within tool head 100 and directed radially towards the wall of pressure tube 200. Reflection of lasers off the surface of pressure tube 200 may be used to measure the motion of the wall.

Of course, the above described embodiments are intended to be illustrative only and in no way limiting. The described embodiments are susceptible to many modifications of form, arrangement of parts, details and order of operation. The scope of the invention is defined by the claims.

## Claims

1. A method of positioning an annulus spacer (12) circumscribing a tube (200), the annulus spacer (12) having an inner cylindrical surface in contact with the tube (200) and the tube (200) having a longitudinal axis, the method comprising:

   vibrating the tube (200) with a transducer (6) to induce motion of the annulus spacer (12);
   measuring vibration of the tube (200) for a first response in a first time interval and a second response in a second time interval in response to the vibration induced by the transducer (6);
   computing a first frequency-domain response function for the first response and a second frequency-domain response function for the second response;
   measuring a relative phase shift between the first and second frequency-domain response functions;
   measuring a relative amplitude shift between the first and second frequency-domain response functions; and
   determining direction of movement of the annulus spacer (12) based on the measured relative phase shift and the measured relative amplitude shift.

2. A method of positioning an annulus spacer (12) circumscribing a tube (200), the annulus spacer (12) having an inner cylindrical surface in contact with the tube (200) and the tube (200) having a longitudinal axis, the method comprising:

vibrating the tube (200) with a transducer (6) to induce motion of the annulus spacer (12);

measuring vibration of the tube (200) for a first response at a first location and a second response at a second location in response to the vibration induced by the transducer (6);

computing a first frequency-domain response function for the first response and a second frequency-domain response function for the second response;

measuring a relative phase shift between the first and second frequency-domain response functions;

measuring a relative amplitude shift between the first and second frequency-domain response functions; and

determining direction of movement of the annulus spacer (12) based on the differences of the measured relative phase shift and the measured relative amplitude shift over time.

3. The method of claim 1 or 2, wherein determining the direction of movement of the annulus spacer (12) comprises determining at least one of direction, speed and distance of movement of the annulus spacer (12).

4. The method of any of claims 1 to 3, wherein the first frequency-domain response is based at least in part on an excitation signal generated by the transducer (6) and the second frequency-domain response is based at least in part on an excitation signal generated by the transducer (6).

5. The method of any of claims 1 to 4, wherein the first response and the second response correspond to a first location and a second location on the tube (200); optionally wherein the measured relative phase shift in a frequency band indicates a delayed response at the second location relative to the first location.

6. The method of any of claims 1 to 5, wherein the measured relative phase shift is in a frequency band that indicates one of increasing or decreasing propagation delay.

7. The method of any of claims 1 to 6, further comprising vibrationally isolating a section of the tube (200) and wherein the vibrating is within the section of the tube (200).

8. The method of any of claims 1 to 7, further comprising applying a moment of force to the tube (200) to release an outer cylindrical surface of the annulus spacer (12) from contact with a generally coaxial outer tube (400).

9. The method of any of claims 1 to 8, further comprising vibrating the tube (200) through a range of frequencies to identify the resonant frequency.

10. The method of either claim 1 or 2, wherein the vibrating is at a resonant frequency.

11. The method of any of claims 1 to 10, wherein the positioning of the annulus spacer (12) is either with reference to axial movement along the longitudinal axis of the tube (200), or
with reference to rotational movement about the longitudinal axis of the tube (200).

12. The method of any of claims 1 to 11, further comprising moving the transducer (6) in a direction corresponding to an observed direction of movement of the annulus spacer (12), wherein the observed direction of movement is computed from the relative phase shift.

13. The method of any of claims 1 to 12, wherein the transducer (6) measures the vibration of the tube (200).

14. The method of any of claims 1 to 13, wherein the relative phase shift is identified in a selected frequency band and/or the relative amplitude shift is identified in a particular frequency band.

15. An apparatus for positioning or detecting the location of an annulus spacer (12) having an inner cylindrical surface in contact with an inner tube (200) and an outer cylindrical surface in contact with a generally coaxial outer tube (400), comprising:

a tool head (100) having a first end and a second end;

a first and a second clamping block assembly (2) at said first and second ends, respectively, of said tool head (100);

one or more transducers (6) associated with said tool head (100) and operable to vibrate said inner tube (200) to induce motion of the annulus spacer (12); and

accelerometers (8) associated with said tool head (100) for measuring vibration of said inner tube (200); and

a control station adapted to operate said tool head (100) in order to carry out any one of the methods of the preceding claims.

**Patentansprüche**

1. Verfahren zum Positionieren eines Ringraum-Abstandhalters (12), der ein Rohr (200) abgrenzt, wobei der Ringraum-Abstandhalter (12) eine zylindrische Innenfläche in Kontakt mit dem Rohr (200) aufweist und das Rohr (200) eine Längsachse aufweist, wobei das Verfahren Folgendes umfasst:

   Schwingen des Rohrs (200) mit einem Wandler (6), um eine Bewegung des Ringraum-Abstandhalters (12) auszulösen;
   Messen der Schwingung des Rohrs (200) auf eine erste Antwort in einem ersten Zeitintervall und eine zweite Antwort in einem zweiten Zeitintervall als Antwort auf die Schwingung, die durch den Wandler (6) ausgelöst wird;
   Berechnen einer ersten Frequenzbereich-Antwortfunktion für die erste Antwort und einer zweiten Frequenzbereich-Antwortfunktion für die zweite Antwort;
   Messen einer relativen Phasenverschiebung zwischen der ersten und zweiten Frequenzbereich-Antwortfunktion;
   Messen einer relativen Amplitudenverschiebung zwischen der ersten und zweiten Frequenzbereich-Antwortfunktion; und
   Bestimmen einer Bewegungsrichtung des Ringraum-Abstandhalters (12) basierend auf der gemessenen relativen Phasenverschiebung und der gemessenen relativen Amplitudenverschiebung.

2. Verfahren zum Positionieren eines Ringraum-Abstandhalters (12), der ein Rohr (200) abgrenzt, wobei der Ringraum-Abstandhalter (12) eine zylindrische Innenfläche in Kontakt mit dem Rohr (200) aufweist und das Rohr (200) eine Längsachse aufweist, wobei das Verfahren Folgendes umfasst:

   Schwingen des Rohrs (200) mit einem Wandler (6), um eine Bewegung des Ringraum-Abstandhalters (12) auszulösen;
   Messen der Schwingung des Rohrs (200) auf eine erste Antwort an einem ersten Ort und eine zweite Antwort an einem zweiten Ort als Antwort auf die Schwingung, die durch den Wandler (6) ausgelöst wird;
   Berechnen einer ersten Frequenzbereich-Antwortfunktion für die erste Antwort und einer zweiten Frequenzbereich-Antwortfunktion für die zweite Antwort;
   Messen einer relativen Phasenverschiebung zwischen der ersten und zweiten Frequenzbereich-Antwortfunktion;
   Messen einer relativen Amplitudenverschiebung zwischen der ersten und zweiten Frequenzbereich-Antwortfunktion; und
   Bestimmen einer Bewegungsrichtung des Ringraum-Abstandhalters (12) basierend auf den Unterschieden der gemessenen relativen Phasenverschiebung und der gemessenen relativen Amplitudenverschiebung im Laufe der Zeit.

3. Verfahren nach Anspruch 1 oder 2, wobei das Bestimmen der Bewegungsrichtung des Ringraum-Abstandhalters (12) das Bestimmen von mindestens einem aus Richtung, Geschwindigkeit und Bewegungsabstand des Ringraum-Abstandhalters (12) umfasst.

4. Verfahren nach einem der Ansprüche 1 bis 3, wobei die erste Frequenzbereichsantwort mindestens teilweise auf einem Anregungssignal basiert, das durch den Wandler (6) erzeugt wird, und die zweite Frequenzbereichsantwort mindestens teilweise auf einem Anregungssignal basiert, das durch den Wandler (6) erzeugt wird.

5. Verfahren nach einem der Ansprüche 1 bis 4, wobei die erste Antwort und die zweite Antwort einem ersten Ort und einem zweiten Ort auf dem Rohr (200) entsprechen;
   wobei optional die gemessene relative Phasenverschiebung in einem Frequenzband eine verzögerte Antwort an dem zweiten Ort relativ zu dem ersten Ort angibt.

6. Verfahren nach einem der Ansprüche 1 bis 5, wobei die gemessene relative Phasenverschiebung in einem Frequenzband ist, das eines aus Erhöhen oder Verringern einer Ausbreitungsverzögerung angibt.

7. Verfahren nach einem der Ansprüche 1 bis 6, ferner umfassend das Isolieren durch Schwingung eines Abschnitts des Rohrs (200), und wobei das Schwingen in dem Abschnitt des Rohrs (200) stattfindet.

8. Verfahren nach einem der Ansprüche 1 bis 7, ferner umfassend das Aufbringen eines Drehmoments an das Rohr (200), um eine zylindrische Außenfläche des Ringraum-Abstandhalters (12) aus dem Kontakt mit einem im Allgemeinen koaxialen Außenrohr (400) zu lösen.

9. Verfahren nach einem der Ansprüche 1 bis 8, ferner umfassend das Schwingen des Rohrs (200) durch einen Frequenzbereich, um die Resonanzfrequenz zu identifizieren.

10. Verfahren nach entweder Anspruch 1 oder 2, wobei das Schwingen bei einer Resonanzfrequenz erfolgt.

11. Verfahren nach einem der Ansprüche 1 bis 10, wobei das Positionieren des Ringraum-Abstandhalters (12) entweder unter Bezugnahme auf Axialbewegung entlang der Längsachse des Rohrs (200) oder unter Bezugnahme auf Drehbewegung um die Längsachse des Rohrs (200) herum erfolgt.

12. Verfahren nach einem der Ansprüche 1 bis 11, ferner umfassend das Bewegen des Wandlers (6) in eine Richtung, die einer beobachteten Bewegungsrichtung des Ringraum-Abstandhalters (12) entspricht, wobei die beobachtete Bewegungsrichtung aus der relativen Phasenverschiebung berechnet wird.

13. Verfahren nach einem der Ansprüche 1 bis 12, wobei der Wandler (6) die Schwingung des Rohrs (200) misst.

14. Verfahren nach einem der Ansprüche 1 bis 13, wobei die relative Phasenverschiebung in einem ausgewählten Frequenzband identifiziert wird und/oder die relative Amplitudenverschiebung in einem bestimmten Frequenzband identifiziert wird.

15. Vorrichtung zur Positionierung oder Erfassung des Standorts eines Ringraum-Abstandhalters (12), der eine zylindrische Innenfläche in Kontakt mit einem Innenrohr (200) und eine zylindrische Außenfläche in Kontakt mit einem im Allgemeinen koaxialen Außenrohr (400) aufweist, umfassend:

einen Gerätekopf (100) mit einem ersten Ende und einem zweiten Ende;
eine erste und eine zweite Spannblockanordnung (2) am ersten bzw. zweiten Ende des Gerätekopfs (100);
einen oder mehrere Wandler (6) im Zusammenhang mit dem Gerätekopf (100) und die operabel sind, um das Innenrohr (200) zu schwingen, um Bewegung des Ringraum-Abstandhalters (12) auszulösen; und
Beschleunigungsmesser (8) im Zusammenhang mit dem Gerätekopf (100) zum Messen einer Schwingung des Innenrohrs (200); und einen Leitstand, der angepasst ist, um den Gerätekopf (100) zu betreiben, um jegliche der Verfahren der vorhergehenden Ansprüche auszuführen.

## Revendications

1. Procédé de positionnement d'une pièce d'espacement annulaire (12) circonscrivant un tube (200), la pièce d'espacement annulaire (12) ayant une surface cylindrique intérieure en contact avec le tube (200) et le tube (200) ayant un axe longitudinal, le procédé comprenant :

la mise en vibration du tube (200) avec un transducteur (6) pour entraîner le mouvement de la pièce d'espacement annulaire (12) ;
la mesure d'une vibration du tube (200) pour une première réponse dans un premier intervalle de temps et une seconde réponse dans un second intervalle de temps en réponse à la vibration entraînée par le transducteur (6) ;
le calcul d'une première fonction de réponse en domaine fréquentiel pour la première réponse et d'une seconde fonction de réponse en domaine fréquentiel pour la seconde réponse ;
la mesure d'un déplacement de phase relatif entre les première et seconde fonctions de réponse en domaine fréquentiel ;
la mesure d'un déplacement d'amplitude relatif entre les première et seconde fonctions de réponse en domaine fréquentiel ; et
la détermination d'une direction de mouvement de la pièce d'espacement annulaire (12) sur la base du déplacement de phase relatif mesuré et du déplacement d'amplitude relatif mesuré.

2. Procédé de positionnement d'une pièce d'espacement annulaire (12) circonscrivant un tube (200), la pièce d'espacement annulaire (12) ayant une surface cylindrique intérieure en contact avec le tube (200) et le tube (200) ayant un axe longitudinal, le procédé comprenant :

la mise en vibration du tube (200) avec un transducteur (6) pour entraîner le mouvement de la pièce d'espacement annulaire (12) ;
la mesure d'une vibration du tube (200) pour une première réponse à un premier emplacement et une seconde réponse à un second emplacement en réponse à la vibration entraînée par le transducteur (6) ;
le calcul d'une première fonction de réponse en domaine fréquentiel pour la première réponse et d'une seconde fonction de réponse en domaine fréquentiel pour la seconde réponse ;
la mesure d'un déplacement de phase relatif entre les première et seconde fonctions de réponse en domaine fréquentiel ;
la mesure d'un déplacement d'amplitude relatif entre les première et seconde fonctions de réponse en domaine fréquentiel ; et
la détermination d'une direction de mouvement de la pièce d'espacement annulaire (12) sur la base des différences du déplacement de phase relatif mesuré et du déplacement d'amplitude relatif mesuré au fil du temps.

3. Procédé selon la revendication 1 ou 2, dans lequel la détermination de la direction de mouvement de la pièce d'espacement annulaire (12) comprend la détermination d'au moins une d'une direction, d'une vitesse et d'une distance de mouvement de la pièce d'espacement annulaire (12).

4. Procédé selon l'une quelconque des revendications 1 à 3, dans lequel la première réponse en domaine fréquentiel est sur la base au moins en partie d'un signal d'excitation généré par le transducteur (6) et la seconde réponse en domaine fréquentiel est sur la base au moins en partie d'un signal d'excitation généré par le transducteur (6).

5. Procédé selon l'une quelconque des revendications 1 à 4, dans lequel la première réponse et la seconde réponse correspondent à un premier emplacement et un second emplacement sur le tube (200) ; optionnellement, dans lequel le déplacement de phase relatif mesuré dans une bande de fréquence indique une réponse retardée au second emplacement relativement au premier emplacement.

6. Procédé selon l'une quelconque des revendications 1 à 5, dans lequel le déplacement de phase relatif mesuré est dans une bande de fréquence qui indique une d'une augmentation ou d'une diminution d'un retard de propagation.

7. Procédé selon l'une quelconque des revendications 1 à 6, comprenant en outre l'isolement vibratoire d'une section du tube (200) et dans lequel la mise en vibration est à l'intérieur de la section du tube (200).

8. Procédé selon l'une quelconque des revendications 1 à 7, comprenant en outre l'application d'un moment de force sur le tube (200) pour libérer une surface cylindrique extérieure de la pièce d'espacement annulaire (12) d'un contact avec un tube extérieur généralement coaxial (400).

9. Procédé selon l'une quelconque des revendications 1 à 8, comprenant en outre la mise en vibration du tube (200) à travers une plage de fréquences pour identifier la fréquence résonante.

10. Procédé selon l'une ou l'autre de la revendication 1 ou 2, dans lequel la mise en vibration est à une fréquence résonante.

11. Procédé selon l'une quelconque des revendications 1 à 10, dans lequel le positionnement de la pièce d'espacement annulaire (12) est en référence à un mouvement axial le long de l'axe longitudinal du tube (200), ou
en référence à un mouvement rotatif autour de l'axe longitudinal du tube (200).

12. Procédé selon l'une quelconque des revendications 1 à 11, comprenant en outre la mise en mouvement du transducteur (6) dans une direction correspondant à une direction observée de mouvement de la pièce d'espacement annulaire (12), dans lequel la direction observée de mouvement est calculée à partir du déplacement de phase relatif.

13. Procédé selon l'une quelconque des revendications 1 à 12, dans lequel le transducteur (6) mesure la vibration du tube (200).

14. Procédé selon l'une quelconque des revendications 1 à 13, dans lequel le déplacement de phase relatif est identifié dans une bande de fréquence sélectionnée et/ou le déplacement d'amplitude relatif est identifié dans une bande de fréquence particulière.

15. Appareil pour positionner ou détecter l'emplacement d'une pièce d'espacement annulaire (12) ayant une surface cylindrique intérieure en contact avec un tube intérieur (200) et une surface cylindrique extérieure en contact avec un tube extérieur généralement coaxial (400), comprenant :

une tête d'outil (100) ayant une première extrémité et une seconde extrémité ;
un premier et un second ensembles blocs de serrage (2) auxdites première et seconde extrémités, respectivement, de ladite tête d'outil (100) ;
un ou plusieurs transducteurs (6) associés à ladite tête d'outil (100) et utilisables pour mettre en vibration ledit tube intérieur (200) pour entraîner le mouvement de la pièce d'espacement annulaire (12) ; et
des accéléromètres (8) associés à ladite tête d'outil (100) pour mesurer la vibration dudit tube intérieur (200) ; et
une station de commande adaptée pour mettre en fonctionnement ladite tête d'outil (100) afin de réaliser l'un quelconque des procédés des revendications précédentes.

END OF SPACER
HOOKED TOGETHER

INCONEL SPACER
SNUG ON
PRESSURE TUBE

GIRDLE WIRE
INSIDE SPACER
~ 1 1/2 TURNS

CALANDRIA
TUBE

PRESSURE
TUBE

FIG. 1

NOT TO SCALE

REACTOR VESSEL (CALANDRIA)

END SHIELD        GAS ANNULUS

FEEDER PIPE

TUBE SHEET       SPACER

CLOSURE PLUG     SHIELD PLUG

CALANDRIA TUBE

ANNULUS BELLOWS

PRESSURE TUBE     FUEL BUNDLES

END FITTING

CALANDRIA TUBE/TUBE SHEET ROLLED JOINT

PRESSURE TUBE/END FITTING ROLLED JOINT

ONLY THREE TUBES SHOWN

FIG. 2

**FIG. 3**

```
          ┌──────────────────────┐
          │   POSITION TOOL      │
          │   HEAD         402   │
          └──────────┬───────────┘
                     │
                     ▼
          ┌──────────────────────┐
          │   PURGE AIR          │
          │               404    │
          └──────────┬───────────┘
                     │
                     ▼
          ┌──────────────────────┐
          │  EXTEND CLAMPING     │
          │  BLOCKS        406   │
          └──────────┬───────────┘
                     │
                     ▼
          ┌──────────────────────┐
    ┌────►│   VIBRATE TUBE       │
    │     │               408    │
    │     └──────────┬───────────┘
    │                │
    │                ▼
    │     ┌──────────────────────┐
    │     │  MEASURE TUBE        │
    │     │  RESPONSE      410   │
    │     └──────────┬───────────┘
    │                │
    │                ▼
    │              ◇ MORE
    │   ┌────────┐Y ◇ POSITIONS TO
    │   │REPOSITION│◄─◇ MEASURE?
    └───│ACCELEROMETERS│  ◇
        │         412│    │ N
        └────────────┘    ▼
                  ┌──────────────────────┐
                  │   CALCULATE          │
                  │ SPACER LOCATION      │
                  │               414    │
                  └──────────────────────┘
                                      400
```

# FIG. 4

$a_t$

$a_b$

**FIG. 5A**

$a_t$

$a_b$

Annulus spacer
reactionary force

**FIG. 5B**

FIG. 6

FIG. 7A

FIG. 7B

23

```
┌─────────────────────────────────────────┐
│   ┌───────────────────────────┐          │
│   │   POSITION TOOL           │          │
│   │   HEAD          802        │          │
│   └───────────────────────────┘          │
│              │                            │
│              ▼                            │
│   ┌───────────────────────────┐          │
│   │   EXTEND CLAMPING         │          │
│   │   BLOCKS        804        │          │
│   └───────────────────────────┘          │
│              │                            │
│              ▼                            │
│   ┌───────────────────────────┐          │
│   │   JACK PRESSURE           │          │
│   │   TUBE          806        │          │
│   └───────────────────────────┘          │
│              │                            │
│              ▼                            │
│   ┌───────────────────────────┐          │
│   │   MEASURE ANNULUS         │          │
│   │   GAP           808        │          │
│   └───────────────────────────┘          │
│              │                            │
│              ▼                            │
│   ┌───────────────────────────┐          │
│   │   EXTEND PIEZO-           │          │
│   │   ACTUATOR      810        │          │
│   └───────────────────────────┘          │
│              │                            │
│              ▼                            │
│   ┌───────────────────────────┐          │
│   │   FIND RESONANT           │          │
│   │   FREQUENCY     812        │          │
│   └───────────────────────────┘          │
│              │                            │
│              ▼                            │
│   ┌───────────────────────────┐          │
│   │   VIBRATE TUBE            │          │
│   │                 814        │          │
│   └───────────────────────────┘          │
│              │                            │
│              ▼                            │
│   ┌───────────────────────────┐          │
│   │   DETERMINE               │          │
│   │   DIRECTION OF            │          │
│   │   MOTION        816        │          │
│   └───────────────────────────┘          │
│              │                            │
│              ▼                            │
│   ┌───────────────────────────┐          │
│   │   POSITION TOOL           │          │
│   │   HEAD          818        │          │
│   └───────────────────────────┘          │
│                            800            │
└─────────────────────────────────────────┘
```

**FIG. 8**

FIG. 9A

FIG. 9B

**FIG. 10A**

**FIG. 10B**

**FIG. 10C**

**FIG. 10D**

**FIG. 10E**

**FIG. 10F**

FIG. 11A (n = 0)

FIG. 11B (n = 1)

FIG. 11C (n = 2)

FIG. 11D (n = 3)

FIG. 11E (n = 4)

RECORD
ACCELERATION
1102

CONVERT TO
FREQUENCY
DOMAIN 1104

COMPARE TIME
INTERVALS
1106

LOCATE PHASE OR
AMPLITUDE SHIFTS
1108

816

# FIG. 12

RECORD
ACCELERATION
1202

CONVERT TO
FREQUENCY
DOMAIN 1204

COMPARE
FUNCTIONS AT
DIFFERENT
LOCATIONS
1206

LOCATE PHASE OR
AMPLITUDE SHIFTS
1208

816

# FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4613477 A
- US 2010284505 A1